# EUROPÄISCHE PATENTSCHRIFT

(11) **EP 2 131 037 B1**
(45) Veröffentlichungstag und Bekanntmachung des Hinweises auf die Patenterteilung: **25.11.2015**
(21) Anmeldenummer: 09007072.3
(22) Anmeldetag: 27.05.2009
(51) Int. Cl.: F03D 7/00, F03D 11/00

(54) **Überwachung des Betriebs einer Windenergieanlage durch Geräuschanalyse**
Monitoring the operation of a wind energy plant by sound analysis
Surveillance du fonctionnement d'une éolienne par analyse sonore

(30) Priorität: 05.06.2008 DE 102008026842
(43) Veröffentlichungstag der Anmeldung: 09.12.2009
(73) Patentinhaber: Senvion GmbH, 22297 Hamburg (DE)
(72) Erfinder: Dicke, Daniel, 24783 Osterrönfeld (DE)
(74) Vertreter: Glawe, Delfs, Moll

(56) Entgegenhaltungen:
- EP-A2- 2 075 465
- WO-A1-01/25631
- WO-A1-2006/122547
- DE-A1- 10 065 314
- OERLEMANS S ET AL: "Acoustic Array Measurements on a Full Scale Wind Turbine (11th)", AIAA/CEAS AEROACOUSTICS CONFERENCE (26TH AIAA AEROACOUSTICS CONFERENCE), MONTEREY, CALIFORNIA, USA,, 23. Mai 2005 (2005-05-23), Seiten 1-17, XP008130077,

## Beschreibung

Die Erfindung betrifft ein Verfahren und eine Anordnung zum Überwachen des Betriebs einer Windenergieanlage, wobei die Windenergieanlage einen Rotor mit einer Mehrzahl von Rotorblättern umfasst. Bei dem Verfahren ist vorgesehen, den durch die Bewegung des Rotors erzeugten Luftschall aufzuzeichnen. Die Anordnung umfasst zu diesem Zweck einen Schallsensor, der sich nicht mit dem Rotor dreht.

Bereits im normalen Betrieb müssen die Gondel und der Turm einer Windenergieanlage erhebliche Kräfte von dem sich drehenden Rotor aufnehmen. Die Komponenten der Windenergieanlage sind dazu ausgelegt, diesen Kräften über die vorgesehene Lebensdauer der Windenergieanlage standzuhalten. Sind jedoch die von dem Rotor auf die Gondel und den Turm übertragenen Kräfte größer, als es im Normalbetrieb vorgesehen ist, so verkürzt sich die Lebensdauer der Komponenten der Windenergieanlage erheblich.

Erheblich größer, als es im Normalbetrieb vorgesehen ist, werden die von dem Rotor ausgeübten Kräfte dann, wenn die einzelnen Rotorblätter des Rotors untereinander nicht richtig ausgewogen sind. Die Ausgewogenheit kann dadurch verloren gehen, dass eines der Rotorblätter beschädigt wird, etwa durch Blitz, Vogelschlag oder Erosion. Eine vergleichbare Wirkung kann es haben, wenn sich auf einem der Rotorblätter Eis anlagert oder wenn eines der Rotorblätter einen abweichenden Anstellwinkel hat. In allen Fällen ist der Zustand des Rotors fehlerhaft und die Windenergieanlage wird Belastungen ausgesetzt, die erheblich über das im Normalbetrieb übliche Maß hinausgehen. Wird der Fehler frühzeitig erkannt, so kann die Drehzahl reduziert werden oder die Windenergieanlage außer Betrieb gesetzt werden, um die Belastung zu vermindern. Außer zu einer erhöhten Belastung führt eine Beschädigung oder Fehlstellung eines Rotorblatts auch zu einem verminderten Energieertrag der Windenergieanlage. Auch unter diesem Gesichtspunkt ist es wünschenswert, einen Fehler des Rotors frühzeitig zu erkennen.

Aus der DE 100 65 314 A1 ist es bekannt, Sensoren in den einzelnen Rotorblättern anzuordnen und aus den Messwerten der Sensoren auf einen Fehler des Rotors zu schließen. Das Anbringen der Sensoren in den Rotorblättern ist jedoch kostenaufwändig. Ferner ist es aus der WO 01/25631 A1 bekannt, den von einer Windenergieanlage abgegebenen Schall aufzuzeichnen und die Schallaufnahme mit einem zuvor erstellten Referenzspektrum zu vergleichen. Es wird davon ausgegangen, dass aus einer Abweichung zwischen der Schallaufnahme und dem Referenzspektrum auf einen fehlerhaften Betriebszustand der Windenergieanlage geschlossen werden kann. Da das normale Betriebsgeräusch sich unter anderem in Abhängigkeit von der Drehzahl ändert, muss eine Vielzahl von Referenzspektren vorgehalten werden. Ferner ist es aus dem Dokument "Acoustic Array Measurement on a Full Scale Wind Turbine",S. Oerleman et al, 11th AIAA/CEAS Aeroacoustics Conference, Monterey, California, USA, 23. Mai 2005, bekannt, den Luftschall eines Rotorblatts mit dem Luftschall eines anderen Rotorblatts zu vergleichen.

Der Erfindung liegt ausgehend vom eingangs genannten Stand der Technik die Aufgabe zu Grunde, ein Verfahren und eine Anordnung vorzustellen, die es auf zuverlässige und kostengünstige Weise erlauben, einen Fehler des Rotors festzustellen. Die Aufgabe wird gelöst durch die Merkmale der unabhängigen Ansprüche. Vorteilhafte Ausführungsformen finden sich in den Unteransprüchen.

Bei dem erfindungsgemäßen Verfahren wird eine Zuordnung zwischen Ausschnitten des aufgezeichneten Schalls und dem von einzelnen Rotorblättern erzeugten Luftschall hergestellt und es wird der Luftschall eines Rotorblatts mit dem Luftschall eines anderen Rotorblatts verglichen.

Eine Umgebungsgröße, die einen Fehler des Rotors begünstigen kann, wird gemessen und eine Information über die Umgebungsgröße wird mit einer Information aus der Schallaufnahme zusammengeführt. Die erfindungsgemäße Anordnung umfasst eine Auswerteeinheit und ein Logikmodul, die dazu ausgelegt sind, diese Verfahrensschritte durchzuführen.

Zunächst werden einige Begriffe erläutert. Der Luftschall entsteht durch eine Wechselwirkung zwischen einem Rotorblatt und der an einem Rotorblatt vorbeiströmenden Luft. Der Luftschall überträgt sich durch die Luft bis zum Schallsensor. Davon zu unterscheiden ist der Körperschall, der sich im Material des Rotorblatts ausbreitet.

Der von den Rotorblättern ausgehende Luftschall wird derart aufgezeichnet, dass sich während eines Umlaufs des Rotors die Intensität des von jedem einzelnen Rotorblatt aufgenommenen Schalls in der Schallaufnahme ändert. Dies kann beispielsweise dadurch erreicht werden, dass der Schallsensor in einem Abstand zur Rotorachse angeordnet ist, so dass sich der Abstand zwischen dem Schallsensor und jedem einzelnen Rotorblatt bei drehendem Rotor laufend ändert. Der aufgezeichnete Schall deckt mindestens einen vollständigen Umlauf des Rotors ab, vorzugsweise jedoch über mehrere vollständige Umläufe des Rotors.

Der Erfindungsgedanke kann dadurch verwirklicht werden, dass eine kontinuierliche Schallaufnahme aufgezeichnet wird, die sich über einen vollständigen Umlauf des Rotors erstreckt. In einer solchen Schallaufnahme ist für jedes Rotorblatt ein Ausschnitt enthalten, in dem der Schall dieses Rotorblatts eine größere Intensität hat als der Schall der anderen Rotorblätter. Die Schallaufnahme kann also in eine Mehrzahl von Ausschnitten unterteilt werden, wobei in jedem Ausschnitt der Schall eines anderen Rotorblatts im Vordergrund steht. Es ist nicht erforderlich, dass die Summe der Ausschnitte der Schallaufnahme insgesamt entspricht. Die Ausschnitte können vielmehr kleinen Teilen der Schallaufnahme entsprechen, in denen der Schall eines Rotorblatts gerade besonders intensiv im Vergleich zum Schall der anderen Rotorblätter ist. Bei einer sich über mehrere Rotorumläufe erstreckenden Schallaufnahme werden mehrere Ausschnitte demselben Rotorblatt zugeordnet. Für die erfindungsgemäß vorzunehmende Zuordnung ist es ausreichend, dass die Ausschnitte zu ein und demselben Rotorblatt gehören, es muss nicht angegeben werden, zu welchem der Rotorblätter die Ausschnitte zugehörig sind.

Alternativ ist es möglich, den Luftschall von vorneherein nur in den Teilabschnitten eines Rotorumlaufs aufzuzeichnen, in denen der Luftschall eines einzelnen Rotorblatts mit hoher Intensität auf den Schallsensor auftrifft. So kann beispielsweise anhand der Winkelposition des Rotors festgestellt werden, dass ein bestimmtes Rotorblatt zu einem bestimmten Zeitpunkt den Schallsensor passiert. Es wird dann eine Schallaufnahme aufgezeichnet, die kurz vor dem betreffenden Zeitpunkt beginnt und kurz nach dem betreffenden Zeitpunkt endet. Während eines Rotorumlaufs wird auf diese Weise für jedes Rotorblatt eine Schallaufnahme aufgezeichnet. Die einzelnen Schallaufnahmen sind dann Ausschnitte des insgesamt aufgezeichneten Schalls und die Information über die Zuordnung zwischen den Ausschnitten und dem Luftschall der einzelnen Rotorblätter ist bereits beim Aufzeichnen des Schalls eingespeist.

Sind die Ausschnitte des aufgezeichneten Schalls den Rotorblättern zugeordnet, so kann der Fachmann mit ihm geläufigen Methoden feststellen, ob der Luftschall eines Rotorblatts von dem Luftschall eines anderen Rotorblatts abweicht.

Das erfindungsgemäße Verfahren hat den Vorteil, dass die für das Erkennen eines Fehlers des Rotorblatts erforderlichen Informationen allesamt aus dem aufgezeichneten Schall gezogen werden können. Sind alle Rotorblätter fehlerfrei, so geben alle Rotorblätter den gleichen Luftschall ab. Ändert sich nun der Betriebszustand der Windenergieanlage, beispielsweise indem sich die Rotordrehzahl erhöht oder vermindert, so ändert sich zwar der Luftschall der Rotorblätter, jedoch führt die Änderung nicht dazu, dass der Luftschall eines Rotorblatts von dem Luftschall anderer Rotorblätter abweicht. Die bei fehlerfreien Rotorblättern aufgezeichnete Schallaufnahme gibt also zu jedem Zeitpunkt den Sollzustand des Luftschalls der Rotorblätter wieder. Führt nun ein Fehler eines Rotorblatts dazu, dass der Luftschall dieses Rotorblatts von dem Luftschall anderer Rotorblätter abweicht, so kann diese Abweichung ohne weiteres festgestellt werden. Das Verfahren kann also einen Fehler eines Rotorblatts entdecken, ohne dass weitere Informationen von außen eingespeist werden müssen.

Der aufgezeichnete Schall ist in der Regel zunächst in Form einer Zeitreihe gespeichert. Einige Informationen, wie beispielsweise die Gesamtintensität des Schalls, können aus der Zeitreihe unmittelbar abgeleitet werden. Eine aussagekräftigere Auswertung wird jedoch möglich, wenn die Zeitreihe in ein Frequenzspektrum transformiert wird. Liegt die Zeitreihe in digitaler Form vor, so kann sie durch diskrete Fourier-Transformation in ein Frequenzspektrum umgewandelt werden. Durch die Transformation wird die Information zugänglich, welche Frequenzen des Schalls in welcher Intensität auftreten. In dem Frequenzspektrum kann eine Frequenzverschiebung enthalten sein, die dadurch entsteht, dass der Luftschall zu einem Teil aufgenommen wird, während das Rotorblatt sich an den Schallsensor annähert, und zu einem anderen Teil, während das Rotorblatt sich von dem Schallsensor entfernt (Doppler-Effekt). Die Auswirkungen des Doppler-Effekts können mit dem Fachmann bekannten Mitteln aus der Schallaufnahme herausgerechnet werden.

Der Schallsensor ist vorzugsweise so angeordnet, dass in erster Linie der vom äußeren Bereich der Rotorblätter und von den Blattspitzen ausgehende Schall aufgenommen wird. Dieser Bereich bestimmt zu einem wesentlichen Teil die aerodynamische Wirkung des Rotors. Erreicht wird dies, wenn der Schallsensor so angeordnet ist, dass er einen Abstand zur Rotorachse hat, der zwischen 50% und 150% des Radius des Rotors liegt. Der Schallsensor kann als Richtmikrofon ausgebildet sein. Die Verwendung eines Richtmikrofons kann insbesondere dann hilfreich sein, wenn der Abstand zwischen dem Schallsensor und der Rotorachse nicht innerhalb der oben angegebenen Grenzen liegt. Es wird dann trotz großen Abstands zwischen Schallsensor und Blattspitzen in erster Linie der von den Rotorblättern ausgehende Luftschall aufgezeichnet. In axialer Richtung ist der Abstand zwischen dem Schallsensor und dem Rotor vorzugsweise kleiner als 50%, weiter vorzugsweise kleiner als 30% als der Radius des Rotors. Dies wird beispielsweise erreicht, wenn der Schallsensor in einer entsprechenden Höhe am Turm angeordnet ist. Alternativ kann der Schallsensor auch am Fundament oder separat von der Windenergieanlage angeordnet sein. In diesen Fällen ist der Schallsensor regelmäßig in einer ortsfesten Position. Ist der Schallsensor an der Gondel der Windenergieanlage angebracht, so ändert sich seine Position, wenn sich die Ausrichtung der Rotorachse ändert. Die Qualität der Schallaufnahme kann gegebenenfalls durch die Verwendung einer Mehrzahl von Schallsensoren verbessert werden.

Ein Schallsensor, der den von den Rotorblättern ausgehenden Luftschall aufzeichnet, nimmt notwendigerweise auch sonstigen Schall auf, der beim Betrieb der Windenergieanlage erzeugt wird oder der aus der Umgebung auf den Schallsensor auftrifft. Der nicht von den Rotorblättern ausgehende Schall wird als Nebenschall bezeichnet. Vorzugsweise wird der Schall so aufgezeichnet, dass der von den Rotorblättern ausgehende Luftschall eine deutlich höhere Intensität hat als der Nebenschall. Die Aussagekraft der Schallaufnahme kann weiter erhöht werden, indem der Nebenschall aus der Schallaufnahme herausgefiltert wird. Ohne weiteres können aus der Schallaufnahme solche Frequenzen herausgefiltert werden, die ein Rotorblatt unter keinen Umständen erzeugt. Schwieriger ist es, solche Bestandteile des Nebenschalls herauszufiltern, die in einem ähnlichen Frequenzbereich liegen wie der von den Rotorblättern ausgehende Luftschall. Wird der Nebenschall separat aufgezeichnet, so ist die Information verfügbar, welcher Schall nicht von den Rotorblättern ausgeht. Der Nebenschall kann dann aus der Schallaufnahme herausgefiltert werden.

Der Nebenschall kann von Schallquellen der Windenergieanlage, wie etwa dem Generator, dem Getriebe, Hydraulikaggregaten oder dem Antrieb der Windnachführung ausgehen, zum Nebenschall gehören aber auch Bodenreflexionen des Schalls. Es kann ein Nebenschallsensor vorgesehen sein, der dazu ausgelegt ist, gerade den Schall aufzunehmen, der nicht von den Rotorblättern ausgeht. Der Nebenschallsensor kann als Richtmikrofon ausgebildet sein, das in Richtung einer bekannten Quelle des Nebenschalls ausgerichtet ist. Damit der von dem Nebenschallsensor aufgezeichnete Schall möglichst genau dem in der Schallaufnahme enthaltenen Nebenschall entspricht, sollte der Nebenschallsensor benachbart zu dem Schallsensor angeordnet sein.

Nebenschall kann alternativ auch dadurch eliminiert werden, dass man der Recheneinheit nur das Auftreten eines Nebenschallereignisses mitteilt. Aus einer Prototypenvermessung kann beispielsweise bekannt sein, dass ein bestimmtes Ereignis während des Betriebs einer Windenergieanlage, wie etwa eine Aktivität der Windnachführung oder eines Hydraulikaggregats, immer wieder denselben Beitrag zum Nebenschall leistet. Um diesen Beitrag aus dem Nebenschall herauszurechnen, muss lediglich der Beginn und das Ende des betreffenden Ereignisses bekannt sein.

Wird der Schall kontinuierlich aufgezeichnet, so steigt bei geeigneter Anordnung des Schallsensors die Intensität des Schalls jeweils an, wenn sich ein Rotorblatt an den Schallsensor annähert, erreicht ein Maximum, wenn das Rotorblatts den Schallsensor passiert, und fällt danach wieder ab. Es ist also aus der Schallaufnahme selbst ersichtlich, welche Ausschnitte der Schallaufnahme einem einzelnen Rotorblatt zuzuordnen sind. Die Zuordnung kann erleichtert werden, wenn zusätzlich eine Information über die Zeitdauer eines Rotorumlaufs eingespeist wird. Während eines Umlaufs passiert nämlich jedes Rotorblatt genau einmal den Schallsensor. Wird alternativ oder zusätzlich eine Information über die Winkelposition des Rotors eingespeist, so wird es möglich, die Ausschnitte der Schallaufnahme bestimmten Rotorblättern zuzuordnen.

Weicht der von einem Rotorblatt ausgehende Schall vom Schall eines anderen Rotorblatts ab, so ist dies ein starker Hinweis darauf, dass mit dem Rotorblatt etwas nicht stimmt. Allerdings liegt nicht zwangsläufig ein Fehler des Rotorblatts vor, sondern es sind auch andere Ursachen für die Variation des Schalls denkbar. So kann sich der von einem Rotorblatt ausgehende Schall beispielsweise infolge von Schräganströmung, Turbulenz, starkem Windgradienten oder Regen verändern. Um festzustellen, ob tatsächlich ein Fehler eines Rotorblatts vorliegt, kann es deswegen zweckmäßig sein, weitere Indikatoren heranzuziehen. Beispielsweise ist es möglich, bestimmte Umgebungsgrößen zu messen, die mit einiger Wahrscheinlichkeit einen Fehler eines Rotorblatts nach sich ziehen. So muss bei einer bestimmten Kombination von Luftfeuchtigkeit und Temperatur damit gerechnet werden, dass sich Eis auf den Rotorblättern festsetzt. Hat es Blitze in der Nähe der Windenergieanlage gegeben, so kann eines der Rotorblätter durch Blitzeinschlag beschädigt worden sein. Deutet eine solche Umgebungsgröße auf einen Fehler eines Rotorblatts hin und weicht zugleich der von einem Rotorblatt ausgehende Schall von dem Schall anderer Rotorblätter ab, so liegt mit hoher Wahrscheinlichkeit ein Fehler des Rotorblatts vor. Auch andere Kriterien wie Belastungen oder Beanspruchungen von Komponenten der Windenergieanlage können als zusätzlicher Indikator herangezogen werden. Schwankt etwa die Rotordrehzahl periodisch mit der Drehfrequenz des Rotors, so ist dies ein starker Indikator für eine Rotorunwucht.

Vorzugsweise wird die beim Vergleichen des Luftschalls der Rotorblätter festgestellte Abweichung quantifiziert, indem ein Differenzwert bestimmt wird, der die Abweichung repräsentiert. Ist der von mehreren Rotorblättern ausgehende Schall identisch, so hat der Differenzwert den Wert null. Der Differenzwert wird desto größer, je stärker die Abweichung ist. Überschreitet der Differenzwert einen vorgegebenen Grenzwert, so kann eine Reaktion erfolgen, wie beispielsweise eine Warnmeldung an eine Leitstelle oder eine Veränderung des Betriebszustands der Windenergieanlage. Vorzugsweise wird beim Überschreiten eines ersten Grenzwerts eine Warnmeldung ausgesendet, beim nachfolgenden Überschreiten eines zweiten, höheren Grenzwerts die Drehzahl vermindert und beim Überschreiten eines dritten, wiederum höheren Grenzwerts die Windenergieanlage außer Betrieb gesetzt.

Der Grund für die Abweichung des Luftschalls eines Rotorblatts von dem Luftschall anderer Rotorblätter kann auch in Umständen liegen, die kein Eingreifen erforderlich machen oder die sich von alleine wieder erledigen. So können beispielsweise Verunreinigungen, Eisansatz oder Feuchtigkeit zu lediglich kurzfristigen Veränderungen des von einem Rotorblatt ausgehenden Luftschalls führen. Um zu verhindern, dass solche Umstände zu einer Warnmeldung oder zu einer Veränderung des Betriebszustands führen, kann vorgesehen sein, dass eine Reaktion auf eine Abweichung des Luftschalls eines Rotorblatts erst dann erfolgt, wenn der Differenzwert den Grenzwert für mehr als ein vorbestimmtes Zeitintervall überschreitet. Das Zeitintervall kann beispielsweise eine Länge von 10 Minuten oder von 30 Minuten haben.

Möglich ist auch der Fall, dass sich bei allen Rotorblättern gleichzeitig ein Fehler ausbildet. Herrscht zum Beispiel die entsprechende Kombination aus Temperatur und Luftfeuchtigkeit, so kann sich auf allen Rotorblättern gleichzeitig eine Eisschicht bilden. Ein solcher Fehler kann mit dem erfindungsgemäßen Verfahren nicht ohne weiteres entdeckt werden, weil es an einer Abweichung des Luftschalls eines Rotorblatts von dem Luftschall anderer Rotorblätter fehlt. Um auch Fehler entdecken zu können, die bei allen Rotorblättern gleichzeitig auftreten, kann es vorgesehen sein, dass die Schallaufnahme zusätzlich mit einem Referenzspektrum verglichen wird. In dem Referenzspektrum ist die Information enthalten, wie die Schallaufnahme in einem bestimmten Betriebszustand beschaffen sein sollte. Es sind also Referenzspektren für unterschiedliche Kombinationen aus Umgebungsbedingungen und Betriebszuständen der Windenergieanlage gespeichert. Die Umgebungsbedingungen können beispielsweise Windgeschwindigkeit, Windrichtung, Turbulenz, Niederschlag und ähnliches betreffen. Die unterschiedlichen Betriebszustände der Windenergieanlage können definiert sein durch Parameter wie Drehzahl, Leistung und Blattwinkel.

Ein Vergleich mit einem Referenzspektrum kann auch dann hilfreich sein, wenn der Rotor nur zwei Rotorblätter aufweist. Wird nämlich bei zwei Rotorblättern festgestellt, dass der Luftschall eines Rotorblatts von dem Luftschall des anderen Rotorblatts abweicht, so ist noch nicht klar, welches der beiden Rotorblätter fehlerhaft ist. Diese Information kann durch Vergleich mit einem Referenzspektrum gewonnen werden, das während eines ungestörten Betriebs unter vergleichbaren Umgebungsbedingungen aufgezeichnet wurde.

Die Auswerteeinheit und das Logikmodul sowie gegebenenfalls weitere Komponenten der erfindungsgemäßen Anordnung sind dazu ausgelegt, alle Schritte des erfindungsgemäßen Verfahrens durchzuführen.

Die Erfindung wird nachfolgend unter Bezugnahme auf die beigefügten Zeichnungen anhand einer vorteilhaften Ausführungsform beispielhaft beschrieben. Es zeigen:
- Fig. 1: eine Ausführungsform einer erfindungsgemäßen Anordnung;
- Fig. 2: eine schematische Darstellung einiger Komponenten der Anordnung aus Fig. 1;
- Fig. 3: eine Zeitreihe einer Schallaufnahme;
- Fig. 4: ein Frequenzspektrum einer Schallaufnahme;
- Fig. 5: ein Frequenzspektrum einer Nebenschallaufnahme; und
- Fig. 6: ein aus den Frequenzspektren der Figuren 4 und 5 erstelltes Differenzspektrum.

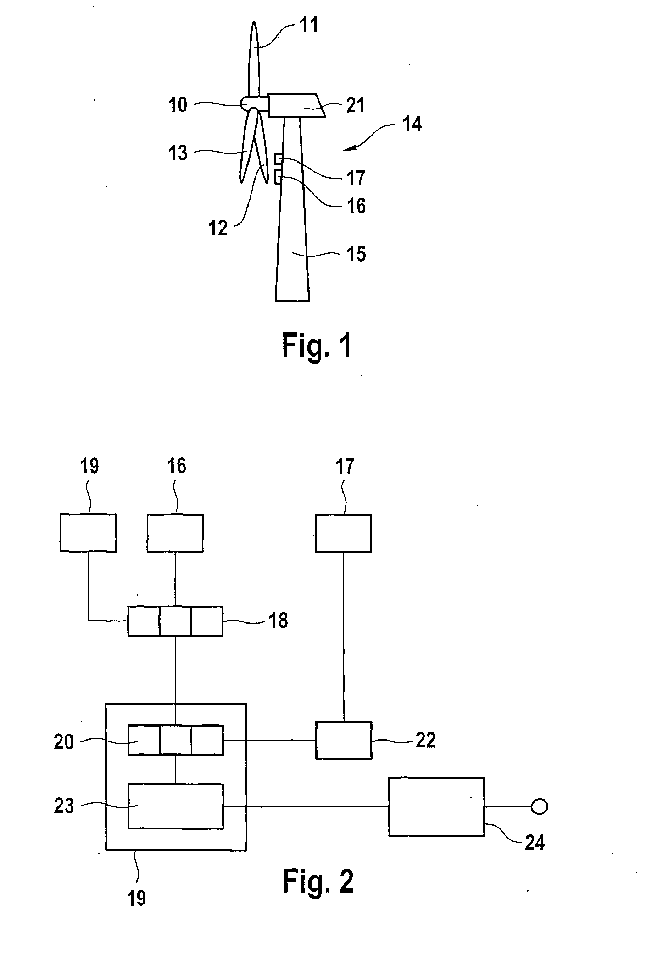

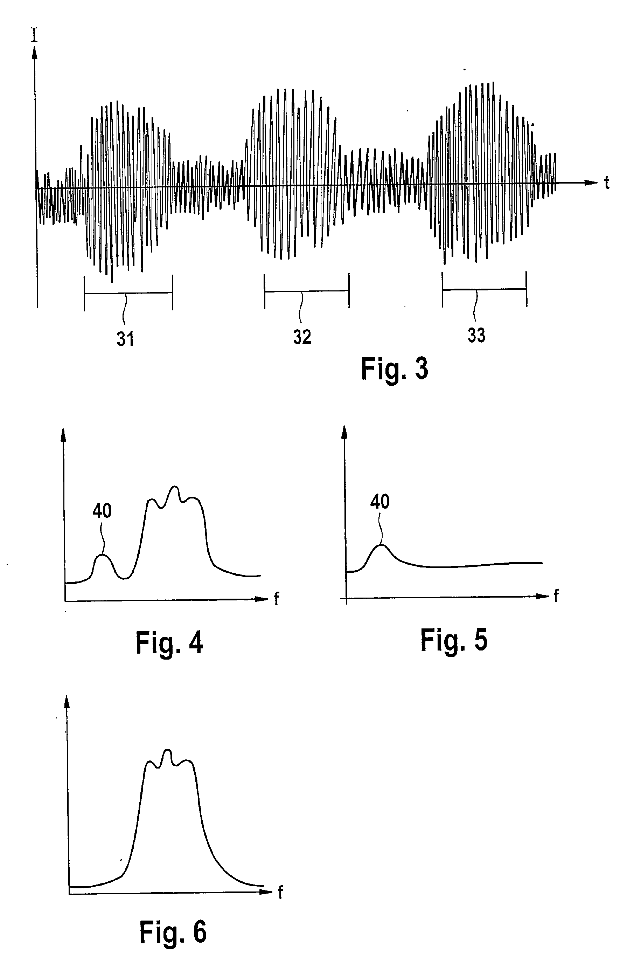

Eine Windenergieanlage 14 in Fig. 1 umfasst einen Rotor 10 mit drei Rotorblättern 11, 12, 13. Am Turm 15 der Windenergieanlage 14 sind ein Schallsensor 16 und ein Nebenschallsensor 17 angeordnet. Im Betrieb der Windenergieanlage 14 dreht sich der Rotor 10 und der Schallsensor 16 zeichnet den von den Rotorblättern 11, 12, 13 ausgehenden Luftschall auf. Der Nebenschallsensor 17 ist dazu ausgelegt, den nicht von dem Rotor 10 ausgehenden Schall, also den Nebenschall aufzunehmen. Die während eines Umlaufs des Rotors 10 mit dem Schallsensor 16 aufgezeichnete Zeitreihe der Schallaufnahme kann als Darstellung der Intensität I des Schalls über der Zeit t eine Gestalt haben, wie sie in Fig. 3 angedeutet ist. Außer einem permanent vorhandenen Grundgeräusch zeigen sich in der Zeitreihe der Fig. 3 drei Ausschnitte 31, 32, 33, in denen die Intensität I des Schalls deutlich erhöht ist.

Die Zeitreihe der Schallaufnahme wird gemäß Fig. 2 von dem Schallsensor 16 zu einer Auswerteeinheit 18 geleitet. Von einem Positionsgeber 19 erhält die Auswerteeinheit 18 ferner eine Information über die momentane Winkelposition des Rotor 10. Die Informationen werden in der Auswerteeinheit 18 zusammengeführt, so dass jedem Zeitpunkt der Zeitreihe eine bestimmte Winkelposition des Rotors 10 zugeordnet ist. In dem Beispiel der in Fig. 3 gezeigten Zeitreihe ergibt die Auswertung, dass in dem Ausschnitt 31 das Rotorblatt 11 den Schallsensor 16 passiert hat, im Ausschnitt 32 das Rotorblatt 12 und im Ausschnitt 33 das Rotorblatt 13. Die Auswerteeinheit 18 nimmt eine entsprechende Zuordnung vor, wobei sich die Auswertung anders als in der vereinfachten Darstellung der Fig. 3 über eine Mehrzahl von Rotorumläufen erstreckt.

Die Zeitreihe der Schallaufnahme wird zusammen mit der Information über die Zuordnung zwischen den Ausschnitten 31, 32, 33 und den Rotorblättern 11, 12, 13 an ein Logikmodul 19 weitergeleitet. Das Logikmodul 19 umfasst eine Recheneinheit 20, das dazu ausgelegt ist, diskrete Fourier-Transformationen durchzuführen. Mit der Recheneinheit 20 werden aus den Ausschnitten 31, 32, 33 der Zeitreihe Frequenzspektren der Ausschnitte 31, 32, 33 berechnet. Für den Ausschnitt 31 ist in Fig. 4 eine mögliche Gestalt des Frequenzspektrums über der Frequenz f angedeutet. Die Frequenzen f, die in dem Ausschnitt 31 verstärkt enthalten sind, zeigen sich in dem Frequenzspektrum der Fig. 4 als Maxima.

Sowohl in dem Ausschnitt 31 als auch in dem Frequenzspektrum der Fig. 4 ist jedoch nicht ausschließlich der von dem Rotorblatt 11 ausgehende Luftschall enthalten, sondern auch der von anderen Quellen stammende Nebenschall. Der als Richtmikrofon ausgebildete Nebenschallsensor 17 ist in Richtung der Gondel 21 ausgerichtet und zeichnet das von der Gondel 21 ausgestrahlte Betriebsgeräusch der Windenergieanlage 14 auf. Die Zeitreihe des Nebenschalls wird einer Recheneinheit 22 zugeführt, die eine diskrete Fourier-Transformation durchführt und das Frequenzspektrum des Nebenschalls berechnet. Eine mögliche Gestalt des Frequenzspektrums des Nebenschalls ist in Fig. 5 angedeutet. In dem Frequenzspektrum der Fig. 5 zeigt sich ein Maximum 40, das auch in dem Frequenzspektrum des Ausschnitts 31 (Fig. 4) auftritt. Das Frequenzspektrum des Nebenschalls wird der Recheneinheit 20 zugeführt und die Recheneinheit 20 rechnet durch Differenzbildung zwischen den Frequenzspektren den Nebenschall aus den Frequenzspektren der eigentlichen Schallaufnahme heraus. Die Gestalt des Frequenzspektrums nach dem Herausrechnen des Nebenschalls ist in Fig. 6 angedeutet. Gegenüber dem Frequenzspektrum der Fig. 4 fehlt das Maximum 40, das von dem Betriebsgeräusch der Gondel 21 stammt.

Die vom Nebenschall befreiten Frequenzspektren der Ausschnitte 31, 32, 33 werden an einen Logikbaustein 23 des Logikmoduls 19 weitergeleitet, der die Frequenzspektren miteinander vergleicht. Die Vergleichbarkeit der Frequenzspektren kann gegebenenfalls durch eine Tiefpassfilterung verbessert werden. Der Logikbaustein 23 berechnet jeweils den Durchschnitt zweier Frequenzspektren und gibt die Abweichung des dritten Frequenzspektrums von dem Durchschnitt in Form eines Differenzwerts an. Der Differenzwert hat den Wert null, wenn keine Abweichung zwischen den Frequenzspektren der Ausschnitte 31, 32, 33 besteht, und nimmt desto größere Werte an, je größer die Abweichung zwischen den Frequenzspektren ist. Der Differenzwert wird an eine Steuereinheit 24 übermittelt, die den Differenzwert mit vorgegebenen Grenzwerten vergleicht. Liegt der Differenzwert für mehr als eine vorgegebenen Zeitdauer oberhalb von einem oder mehreren der Grenzwerte, so wird eine Warnmeldung an eine Leitstelle gesendet bzw. die Drehzahl der Windenergieanlage 14 vermindert.

Das soeben beschriebene Verfahren stellt einen einfache Ausführungsform zum Vergleich des Luftschalls von mehreren Rotorblättern dar. Dem Fachmann sind weitaus komplexere Methoden bekannt, um einen Vergleich des aufgenommenen Luftschalls auch unter schwierigen Randbedingungen zu ermöglichen. Nur beispielhaft sei die Ordnungsanalyse genannt, bei der die Schallsignale über dem Drehzahlsignal aufgetragen wird, um die Veränderung der Schallemission mit der Drehzahl zu berücksichtigen. Ähnliche Verfahren sind für andere Einflussparameter wie Blattwinkel, Generatorleistung, Windgeschwindigkeit, Windrichtung, Windgradient etc. durchführbar, um möglichst saubere Schallspektren bei veränderlichen Umgebungsbedingungen zu ermitteln.

## Patentansprüche

1. Verfahren zum Überwachen des Betriebs einer Windenergieanlage (14), wobei die Windenergieanlage (14) einen Rotor (10) mit einer Mehrzahl von Rotorblättern (11, 12, 13) aufweist, mit folgenden Schritten:
a. Aufzeichnen von durch die Bewegung des Rotors (10) erzeugtem Luftschall und Transformieren des über der Zeit aufgezeichneten Schalls in ein Frequenzspektrum;
b. Herstellen einer Zuordnung zwischen Ausschnitten (31, 32, 33) des aufgezeichneten Schalls und dem von einzelnen Rotorblättern (11, 12, 13) erzeugten Luftschall;
c. Vergleichen des Luftschalls eines Rotorblatts (11, 12, 13) mit dem Luftschall eines anderen Rotorblatts (11, 12, 13)
d. Messen einer Umgebungsgröße, die einen Fehler des Rotors (10) begünstigen kann, **dadurch gekennzeichnet,**
e. **dass** eine Information über die Umgebungsgröße mit einer Information aus der Schallaufnahme zusammengeführt wird.

2. Verfahren nach Anspruch 1, **dadurch gekennzeichnet, dass** Nebenschall aus dem aufgezeichneten Schall herausgefiltert wird.

3. Verfahren nach Anspruch 1 oder 2, **dadurch gekennzeichnet, dass** die Umlaufdauer und/oder die Winkelposition des Rotors (10) bestimmt wird und dass die Zuordnung in Schritt b. auf der Basis der Umlaufdauer und/oder der Winkelposition des Rotors (10) vorgenommen wird.

4. Verfahren nach einem der Ansprüche 1 bis 3, **dadurch gekennzeichnet, dass** in Schritt c. ein Differenzwert berechnet wird, der die Abweichung zwischen dem Luftschall eines Rotorblatts (11, 12, 13) und dem Luftschall eines anderen Rotorblatts (11, 12, 13) repräsentiert.

5. Verfahren nach einem der Ansprüche 1 bis 4, **dadurch gekennzeichnet, dass** das Überschreiten eines vorgegebenen Grenzwertes durch den Differenzwert als Bedingung herangezogen wird, gemäß der eine Warnmeldung ausgesendet wird und/oder der Betriebszustand der Windenergieanlage (14) verändert wird.

6. Verfahren nach Anspruch 5, **dadurch gekennzeichnet, dass** erst dann eine Warnmeldung ausgesendet wird und/oder der Betriebszustand der Windenergieanlage (14) verändert wird, wenn der Differenzwert für mehr als eine vorbestimmte Zeitdauer oberhalb des Grenzwerts liegt.

7. Verfahren nach einem der Ansprüche 1 bis 6, **dadurch gekennzeichnet, dass** die Schallaufnahme mit einem Referenzspektrum verglichen wird.

8. Anordnung zum Überwachen des Betriebs einer Windenergieanlage umfassend:
a. eine Windenergieanlage (14), die einen Rotor (10) mit einer Mehrzahl von Rotorblättern (11, 12, 13) aufweist;
b. einen Schallsensor (16), der sich nicht mit dem Rotor (10) dreht und der durch die Bewegung des Rotors (10) erzeugten Luftschalls aufzeichnet;
c. eine Auswerteeinheit (18), die eine Zuordnung herstellt zwischen Ausschnitten (31, 32, 33) des aufgezeichneten Schalls und dem von einzelnen Rotorblättern (11, 12, 13) erzeugten Luftschall;
d. ein Logikmodul (19), das über der Zeit aufgezeichneten Schall in ein Frequenzspektrum transformiert und das den Luftschall eines Rotorblatts (11, 12, 13) mit dem Luftschall eines anderen Rotorblatts (11, 12, 13) vergleicht; und
e. einen Sensor zum Messen einer Umgebungsgröße, die einen Fehler des Rotors (10) begünstigen kann;
**dadurch gekennzeichnet, dass**
f. außerdem vorgesehen ist, eine Information über die Umgebungsgröße mit einer Information aus der Schallaufnahme zusammenzuführen.

9. Anordnung nach Anspruch 8, **dadurch gekennzeichnet, dass** der Schallsensor (16) als Richtmikrofon ausgebildet ist.

10. Anordnung nach Anspruch 8 oder 9, **dadurch gekennzeichnet, dass** ein Nebenschallsensor (17) vorgesehen ist und dass der Nebenschallsensor (17) benachbart zu dem Schallsensor (16) angeordnet ist.

11. Anordnung nach Anspruch 10, **dadurch gekennzeichnet, dass** der Nebenschallsensor (17) als Richtmikrofon ausgebildet ist.

## Claims

1. Method for monitoring the operation of a wind energy plant (14), the wind energy plant (14) having a rotor (10) with a plurality of rotor blades (11, 12, 13), having the following steps:
a. recording air-borne noise produced by movement of the rotor (10), and transforming the noise recorded over time into a frequency spectrum;
b. producing an assignment between sections (31, 32, 33) of the recorded noise and the air-borne noise produced by individual rotor blades (11, 12, 13);
c. comparing the air-borne noise of one rotor blade (11, 12, 13) with the air-borne noise of another rotor blade (11, 12, 13); and
d. measuring an environmental variable which can favour a fault of the rotor (10),
**characterized in that** an item of information concerning the environmental variable is associated with an item of information from the noise recording.

2. Method according to Claim 1, **characterized in that** secondary noise is filtered out from the recorded noise.

3. Method according to Claim 1 or 2, **characterized in that** the period of revolution and/or the angular position of the rotor (10) are/is determined, and **in that** the assignment in step b. is undertaken on the basis of the period of revolution and/or the angular position of the rotor (10).

4. Method according to one of Claims 1 to 3, **characterized in that** in step c. a differential value is calculated which represents the deviation between the air-borne noise of one rotor blade (11, 12, 13) and the air-borne noise of another rotor blade (11, 12, 13).

5. Method according to one of Claims 1 to 4, **characterized in that** the overshooting of a prescribed limit value by the differential value is used as a condition in accordance with which a warning message is emitted and/or the operating state of the wind energy plant (14) is altered.

6. Method according to Claim 5, **characterized in that** only when the differential value of more than one predetermined time period lies above the limit value is a warning message transmitted and/or the operating state of the wind energy plant (14) altered.

7. Method according to one of Claims 1 to 6, **characterized in that** the noise recording is compared with a reference spectrum.

8. Arrangement for monitoring the operation of a wind energy plant, comprising:
a. a wind energy plant (14) which has a rotor (10) with a plurality of rotor blades (11, 12, 13);
b. a noise sensor (16) which does not turn with the rotor (10), and which records air-borne noise produced by the movement of the rotor (10);
c. an evaluation unit (18) which produces an assignment between sections (31, 32, 33) of the recorded noise and the air-borne noise produced by individual rotor blades (11, 12, 13);
d. a logic module (19) which transforms noise recorded over time into a frequency spectrum, and which compares the air-borne noise of one rotor blade (11, 12, 13) with the air-borne noise of another rotor blade (11, 12, 13); and
e. a sensor for measuring an environmental variable which can favour a fault of the rotor (10);
**characterized in that**
f. it is provided, furthermore, that an item of information concerning the environmental variable is associated with an item of information from the noise recording.

9. Arrangement according to Claim 8, **characterized in that** the noise sensor (16) is designed as a directional microphone.

10. Arrangement according to Claim 8 or 9, **characterized in that** a secondary noise sensor (17) is provided, and **in that** the secondary noise sensor (17) is arranged adjacent to the noise sensor (16).

11. Arrangement according to Claim 10, **characterized in that** the secondary noise sensor (17) is designed as a directional microphone.

## Revendications

1. Procédé de surveillance du fonctionnement d'une éolienne (14), l'éolienne (14) comprenant un rotor (10) avec une pluralité de pales de rotor (11, 12, 13), avec les étapes suivantes :
a. enregistrement du son produit par le mouvement du rotor (10) et transformation du son enregistré au cours du temps en un spectre de fréquences ;
b. établissement d'une correspondance entre des portions (31, 32, 33) du son enregistré et le son produit par les différentes pales du rotor (11, 12, 13) ;
c. comparaison du son d'une pale de rotor (11, 12, 13) avec le son d'une autre pale de rotor (11, 12, 13)
d. mesure d'une grandeur environnementale qui peut favoriser une défaillance du rotor (10),
**caractérisé en ce que**
e. une information concernant la grandeur environnementale est regroupée avec une information provenant de l'enregistrement du son.

2. Procédé selon la revendication 1, **caractérisé en ce qu'**un son secondaire est filtré hors du son enregistré.

3. Procédé selon la revendication 1 ou 2, **caractérisé en ce que** la durée de rotation et/ou la position angulaire du rotor (10) est déterminée et **en ce que** la mise en correspondance de l'étape b. est effectuée sur la base de la durée de rotation et/ou de la position angulaire du rotor (10).

4. Procédé selon la revendication 1 ou 3, **caractérisé en ce que**, dans l'étape c., une valeur différentielle est calculée, qui représente l'écart entre le son d'une pale de rotor (11, 12, 13) et le son d'une autre pale de rotor (11, 12, 13).

5. Procédé selon l'une des revendications 1 à 4, **caractérisé en ce que** le dépassement d'une valeur limite prédéterminée par la valeur différentielle est utilisée en tant que condition, selon laquelle un message d'avertissement est envoyé et/ou l'état de fonctionnement de l'éolienne (14) est modifié.

6. Procédé selon la revendication 5, **caractérisé en ce qu'**un message d'avertissement n'est envoyé et/ou l'état de fonctionnement de l'éolienne (14) n'est modifié que lorsque la valeur différentielle se trouve au-dessus de la valeur limite pendant plus d'une période prédéterminée.

7. Procédé selon l'une des revendications 1 à 6, **caractérisé en ce que** l'enregistrement du son est comparé avec un spectre de référence.

8. Dispositif de surveillance du fonctionnement d'une éolienne, comprenant :
a. une éolienne (14) qui comprend un rotor (10) avec une pluralité de pales de rotor (11, 12, 13) ;
b. un capteur de son (16), qui ne tourne pas avec le rotor (10) et qui enregistre le son produit par le mouvement du rotor (10) ;
c. une unité d'analyse (18) qui établit une correspondance entre des portions (31, 32, 33) du son enregistré et le son produit par les différentes pales du rotor (11, 12, 13) ;
d. un module logique (19), qui transforme le son enregistré au cours du temps en un spectre de fréquence et qui compare le son d'une pale de rotor (11, 12, 13) avec le son d'une autre pale de rotor (11, 12, 13) ; et
e. un capteur pour la mesure d'une grandeur environnementale qui peut favoriser une défaillance du rotor (10) ;
**caractérisé en ce que**
f. il est en outre prévu de regrouper une information concernant la grandeur environnementale avec une information provenant de l'enregistrement du son.

9. Dispositif selon la revendication 8, **caractérisé en ce que** le capteur de son (16) est conçu comme un microphone directionnel.

10. Dispositif selon la revendication 8 ou 9, **caractérisé en ce qu'**un capteur de son secondaire (17) est prévu et **en ce que** le capteur de son secondaire (17) est disposé à proximité du capteur de son (16).

11. Dispositif selon la revendication 10, **caractérisé en ce que** le capteur de son secondaire (17) est conçu comme un microphone directionnel.
